# EUROPEAN PATENT SPECIFICATION

(11) **EP 2 140 753 B1**
(45) Date of publication and mention of the grant of the patent: **29.06.2011**
(21) Application number: 08011958.9
(22) Date of filing: 02.07.2008
(51) Int. Cl.: A01D 90/02, A01D 90/04

(54) **Tine feeder**
Zinkenförderer
Dispositif d'alimentation de dent

(43) Date of publication of application: 06.01.2010
(73) Proprietor: Kuhn-Geldrop B.V., 5667 KP Geldrop (NL)
(72) Inventor: Swinkels, J.J.A., 5671 EA Nuenen (NL)
(74) Representative: Grünecker, Kinkeldey, Stockmair & Schwanhäusser Anwaltssozietät

(56) References cited:
- DE-A1- 19 541 561
- DE-U1- 9 316 378
- DE-U1- 20 308 369

## Description

The invention relates to a crop conveyor according to the preamble part of claim 1.

DE-U-9316378 discloses to interconnect the ring segments via threaded connections and to provide a form-fit between each ring segment and the rotor. Each ring segment carries either a single tine or several tines forming a single circumferential row. Adjacent rings are arranged with a circumferential phase shift on the rotor. Each knife engages in-between two adjacent tines. The cutting action of the knife generates significant sidewardly oriented forces in each tine. As each tine root is supported against sidewardly acting forces between spaced apart annular thin cheeks of the ring segment and by a form-fit engagement with the rotor only, the stability of the tines against such sidewardly acting forces is low. As each ring only carries a single circumferential row of tines, an undesirably large number of ring segments and threaded connection is needed to equip the rotor with a sufficiently high number of tines.

NL-C-1023390 discloses to assembly each ring from three ring segments. Two of the three ring segments have the same configurations each carrying two tines in-line, while the third ring segment carries three tines in-line. The ring segments are axially and circumferentially secured in the rotor by form-fit connections. The ring segments of each ring are interconnected via flange joints and tension screws. In a mid part of the rotor body adjacent tines are arranged with phase shifts in circumferential direction. If the same number of tines and knives are provided in axial direction of the rotor, the tines can only be relatively thin and have too little stability against sidewardly acting forces. The number of rings is undesirably large

The above-mentioned, known conveyors having detachably interconnected ring segments offer the advantage to allow to replace tines in case of damage. However, the mounting structure is complicated and needs a large number of parts. The lateral stability of the tines against forces substantially in the direction of the ring axis occurring during the cutting action of the knives or similarly during an engagement of the retainers for removing crop from the tines is low.

It is an object of the invention to provide a structurally simple crop conveyor performing with significantly improved side stability of the tines and with optimised crop flow conditions and cutting conditions.

This object is achieved by the features of claim 1.

As the at least two axially spaced apart tines are rigidly connected to each other and stably support each other in the ring segment, each tine thus performs with improved side stability against sidewardly acting forces occurring during a cutting action of a knife and during the engagement of a retainer. The tines may be formed relatively thickly in axial direction of the rotor. The tines commonly share the ring segment and the connection between the ring segments. In particular in the case of two circumferential rows of tines on one ring segment half of the connections and half of the ring segments can be saved compared to prior art solutions with rings each having a single circumferential row of tines. The tines of the ring segment can be arranged in-phase, almost in phase or with a phase shift in rotary direction.

Provided that the tines on the ring segment are truly or almost in phase in circumferential direction, and that either a knife is engaging between the tines and/or two knives are engaging at the outsides of these tines, relatively symmetric cutting conditions will result with almost no or only minimal side forces acting on the knives and/or the tines. In order to improve the flow of the crop through the crop conveyor as well a retainer may engage between adjacent tines and/or at both outer sides of adjacent tines of the ring segment. This results in a better guidance of the crop flow and symmetric engagement conditions with almost no side forces on the tines.

In a further preferred embodiment a support plate is provided between respective two root portions of the tines of the ring segment. The support plate, preferably, is sickle-shaped, such that its outer circumference does not interfere with the engagement of the knife and/or the retainer. The inner periphery of the support plate may be used to provide a form-fit engagement of the ring segment with the rotor. The support plate and the tines at their root portions are rigidly connected to each other in axial direction. The support plate additionally increases rigidity and side stability of each tine. Finally, the support plate increases the overall rigidity of the entire ring segment and creates a broad contact surface on the rotor.

Preferably the rigid connection is constituted by welding. Alternatively, screws could be used there.

In a preferred embodiment threaded connections are provided between the ring segments. As the axially spaced apart tines on the ring segment commonly share the threaded connections, the number of threaded connections is less than the number of tines count in axial direction of the rotor. Furthermore, the connecting forces of the threaded connections act on all tine root portions, stabilise the tines and contribute to their side stability.

The detachably connected ring segments can be separated e.g. for replacement purposes, by using various tools like hand tools or power tools.

Preferably, each tine root portion has a cut-out close to the inner periphery such that there the support plate protrudes inwardly. In the cut-outs the tine root portions can easily be welded to the support plate, resulting in a stable and rigid ring segment unit consisting of the tines and the support plate. However, further locations may be prepared to suitably place welds, e.g. by manufacturing the components from steel plates by laser cutting.

In a further preferred embodiment axial and rotary form-fit connections are provided between each ring segment and the rotor. These form-fit connections may be realised by mutually co-acting engagement depressions or slots and engagement protrusions, which are distributed between the rotor and/or the inner periphery of the ring segment. The form-fit connections transmit the loads occurring between the rotor body and the ring segments and prevent circumferential or axial slip.

Preferably, at least one protrusion is provided at the inner periphery of the support plate at the sides of which the tine root portions are fixed. The protrusion may be configured for radial insertion into a slot of the rotor. In addition at least one hook-shaped protrusion is provided at the inner periphery of each tine root portion of the ring segment. The hook protrusion is configured for first being inserted in radial direction and then being hooked in in circumferential direction into another slot of the rotor. The hook protrusions of each ring segment serve to also radially secure the ring segment to the rotor.

In a preferred embodiment the axial distance provided between the tines of the ring segment corresponds to the axial thickness of the support plate. In the case that a knife and/or a retainer is positioned such that it engages between the tines, the axial distance at least corresponds to the axial thickness of a knife and/or a retainer. There are different possibilities for arranging the knifes and the tines, and if provided, the retainers.

Among the rings mounted on the rotor a respective knife may engage between two adjacent tines of each ring segment only. However, alternatively or additively two further knives could be arranged at the outer sides of these two adjacent tines. The same is true for retainers co-acting with the tines. A retainer may engage at the same axial location of the rotor as the knife, or may be axially offset with respect to the knife, and vice versa.

In another preferred embodiment a first tensioning skewback and a second tensioning skewback are provided in each tine root portion of the ring segment. The skewbacks are axially aligned with each other in the ring segment and accommodate first and second axial tensioning axles used for a threaded connection. These tensioning axles, preferably, can be rotated about the axis which is parallel to the axis of the rotor, in order to allow to easily screw in the tensioning screw. At least one tensioning screw per threaded connection engages at the first and second tensioning axles. The ring segments even could be provided with two or more tensioning screws or various other releasable connecting and/or tensioning structures.

The first tensioning skewback may be designed as an axial through bore, while the second tensioning skewback may be a jaw being open to the inner periphery of the root portion. This design allows to easily separate the ring segments after the tensioning screw has been loosened so far that one tensioning axle may be swung out of the jaw.

In a further preferred embodiment the hook protrusion is positioned underneath the first tensioning skewback. By using the tensioning movement of the tensioning screw of the threaded connection the hook of the hook protrusion can be tightened in tensioning direction in the slot of the rotor, and such that the hook protrusion radially fixes the ring segment on the rotor.

In a preferred embodiment the first tensioning axle is formed with a threaded bore for a threaded shaft of the tensioning screw. This means that the first tensioning axle is designed like a threaded nut which may be rotatably supported in the first tensioning skewback such that it can be adjusted easily for inserting the threaded shaft of the tensioning screw. The second tensioning axle solely contains a through bore, and preferably a sunk-in abutment shoulder for a head of the tensioning screw. In order to save space for a tool needed for manipulating the tensioning screw, the tensioning screw, preferably, is a hexagon socket set screw or a hexagon socket screw.

In a preferred embodiment the tensioning screw of the threaded connection is positioned in the interspace defined by the axial distance between the tines of the ring segment. This arrangement of the tensioning screw facilitates easy access to the tensioning screw.

In a preferred embodiment the support plate extends between the first and second tensioning skewbacks of the tine root portions, in order not to interfere with the threaded connections between interconnected ring segments.

In a preferred embodiment each ring mounted to the rotor consists of three identical ring segments each respectively having two axially spaced apart tines of substantially triangular plate shape. As conventional, axially adjacent rings may be placed offset in relation to each other in rotary direction on the rotor, in order to smoothly distribute the reaction forces from the knives and the retainers during rotation of the rotor.

In a preferred embodiment the periphery of the rotor does not necessarily need to be round or cylindrical, but instead could be hexagonal or octagonal. The inner periphery of each ring segment is designed such that it fits to the respectively selected cross-section of the rotor.

In order to achieve at least symmetric cutting conditions the axially spaced apart tines of each ring segment are of equal shape and are positioned such that they are congruent to each other in axial direction. In the case that the crop is cut by a knife engaging between adjacent tines, both tines at the same time are able to support the crop on both sides of the knife in symmetrical fashion. This avoids the generation of significant sidewardly acting forces.

An embodiment of the invention will be described with the help of the drawings. In the drawings is:
Fig. 1 a general perspective view of a crop conveyor in line with a pick-up device,
Fig. 2 a perspective and more detailed illustration of the crop conveyor of Fig. 1,
Fig. 3 a side view related to Figs. 1 and 2,
Fig. 4 a perspective view of a tine carrying ring of the crop conveyor,
Fig. 5 a side view of a portion of the ring of Fig. 4, and
Fig. 6 a perspective view of a detail from Figs 4 and 5.

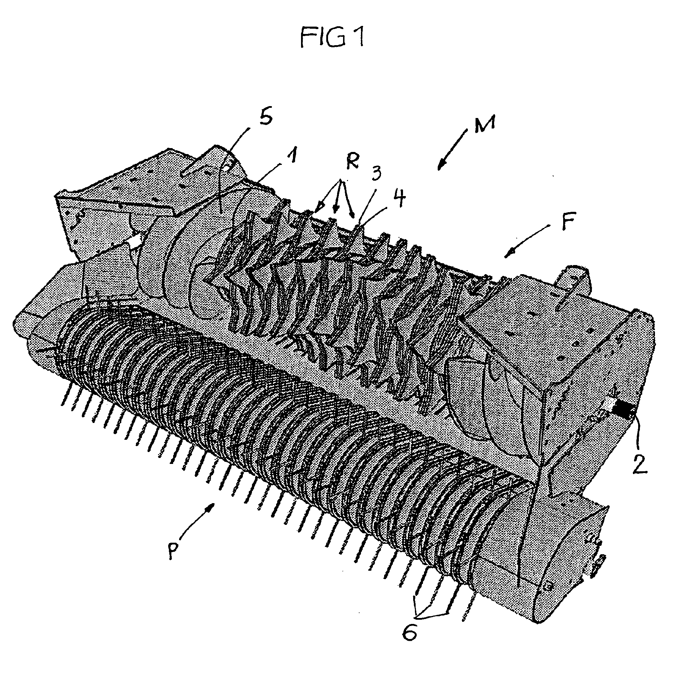

Figs 1, 2 and 3 illustrate different views of a part of an agriculture machine M like a baler or self-loading wagon.

The machine M comprises a pick-up device P for taking crop or crop material (mowed grass or hay or the like) from the ground to feed a crop conveyor F which then conveys the crop material further into the machine, e.g., for further processing.

In Fig. 1 the crop conveyor F has a horizontally rotatable rotor 1 with a shaft 2 and a series of, in the shown embodiment, tines 3, 4 arranged pair-wise on the rotor. In outer end regions of the rotor augers 5 are provided for narrowing the crop flow from the broader working width of the pick-up device P to a smaller conveying width. In the shown embodiment, the pair-wise and in circumferential phase arranged tines 3,4 are mounted to rings R which are coaxial to the shaft 2 of the rotor and are detachably mounted on the rotor 1. Axially adjacent rings R are arranged on the rotor 1 with a phase shift in circumferential direction. Each ring R has three pairs of tines 3, 4.

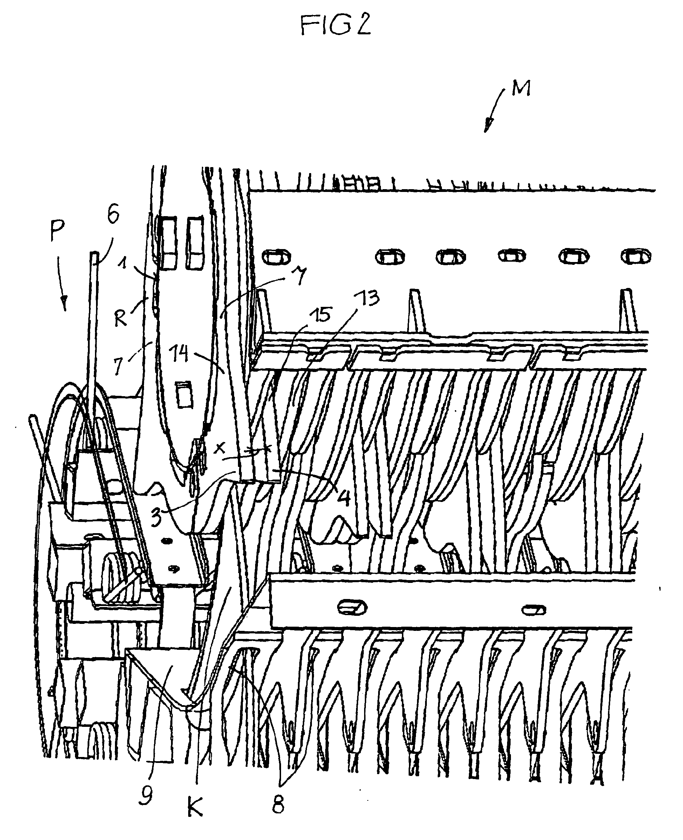

In the perspective view of Fig. 2 (viewing direction in Fig. 1 from the rear side on a front end of the rotor 1) it can be seen that the tines 3, 4 which are spaced apart axially with a distance x on a respective ring R co-act with knives K inserted from a lower position through slots 8 of a bottom plate 9 of a channel leading to the not shown interior of the machine M. The pick-up device P has spring steel tines 6. In the shown embodiment each pair of tines 3, 4 is rigidly mounted via tine root portions 14, 15 on one ring segment 7. At least two, in the shown embodiment three ring segments 7, are interconnected via connections S to constitute one ring R on the rotor 1. The rings R are coaxial to the shaft 2 of the rotor 1.

From the top side of the channel into which the knives K engage, retainers 13 are extending downwardly, and each retainer 13 engages into the interspace of each pair of tines 3, 4. The tines 3, 4, in this embodiment, have a substantially triangular shape and consist, e.g. of relatively thick and stable steel sheet material. In the shown embodiment the tines 3, 4 are in phase in circumferential direction, such that they are congruent in axial direction. Each ring segment 7 has one pair of tines 3, 4. Alternatively, each ring segment 7 may have more than two tines working in planes which are offset in axial direction of the rotor 1. In the embodiment shown, tines 3, 4 are provided on each ring segment 7. In a not shown alternative, ring segments without any tines could be arranged or ring segments could be provided having more than one group of tines in circumferential direction.

In the shown embodiment crop supplied by the pick-up device P into the channel bounded by the bottom plate 9 will be conveyed by the tines 3, 4 on the rotating rotor 1 past the knives 9 which cut the crop. The cut crop then is conveyed further along the channel and is removed partly by gravity and partly by the retainers 13 from the rotor 1. As in the shown embodiment, the tines 3, 4 are positioned in circumferential phase with each other, the crop, while being cut by the knife K and while being removed by a retainer 13 is conveyed relatively symmetrically with respect to the knife K and the retainer 13, each engaging in the interspace between the pair of tines 3, 4, such that optimised cutting and removing conditions are achieved without generating significant sidewardly acting forces. In a not shown embodiment, an additional knife K may be positioned at each outer side of the pair of tines 3, 4, or knives K may be positioned at the outer sides of the pair of tines 3, 4 only. This is also valid for the retainers 13 which need not necessarily be positioned in line with the knife K in rotary direction of the tines 3, 4.

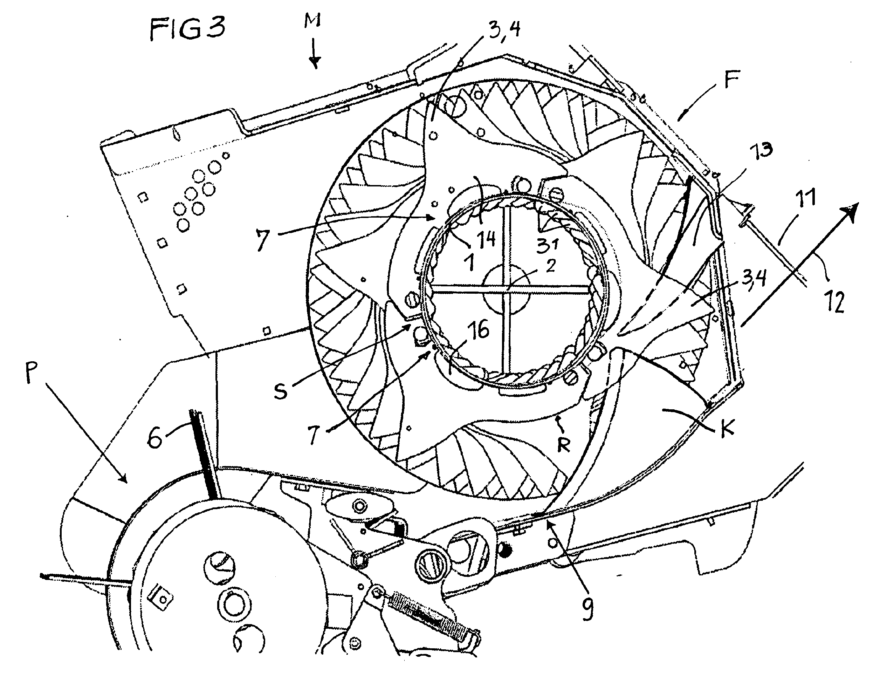

The side view on a front end of the rotor 1 in Fig. 3 shows that three identical ring segments 7 are interconnected via the connections S to define one ring A surrounding the periphery of the rotor 1. A circumferential and axial form-fit securing each ring R in addition to the clamping force generated by the connections S against slip on the rotor 1, is provided e.g. via hooks 31 between each ring segment 7 and the rotor 1 (a hollow tubular rotor body supported on the shaft 2). The rotor 1 equipped with the rings R is positioned with a small distance above the bottom plate 9 through which the knives K are engaging. The pick-up device P supplies the crop material through an in-feed section 10 into the channel bounded by the bottom plate 9. The rotor 1 then conveys the crop material through the channel and transports the cut crop material in the direction of an arrow 12 into a further chamber 11 of the machine M. The retainers 13 are positioned above the channel and a transition from the channel into the chamber 11. The knives K, in some cases, may be retractable through the bottom plate 9 such that then the rotor 1 only has a conveying function without cutting the crop, or in case of a solid foreign object in the crop flow.

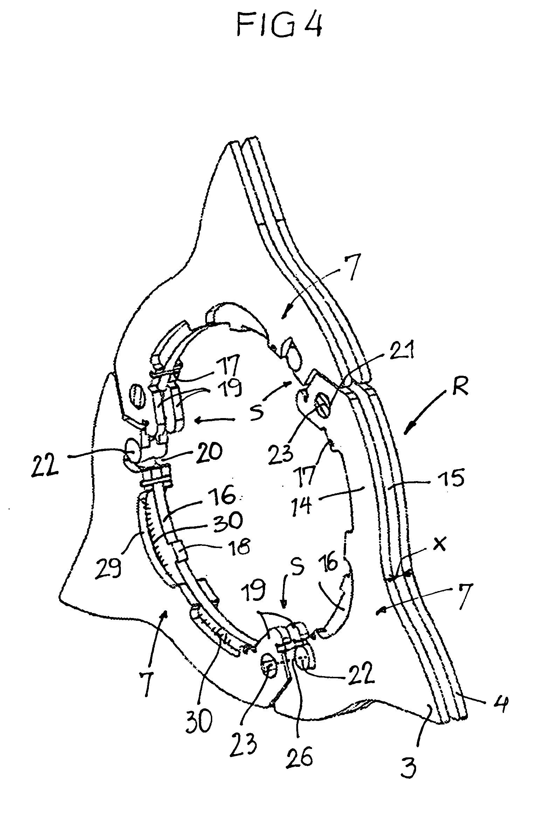

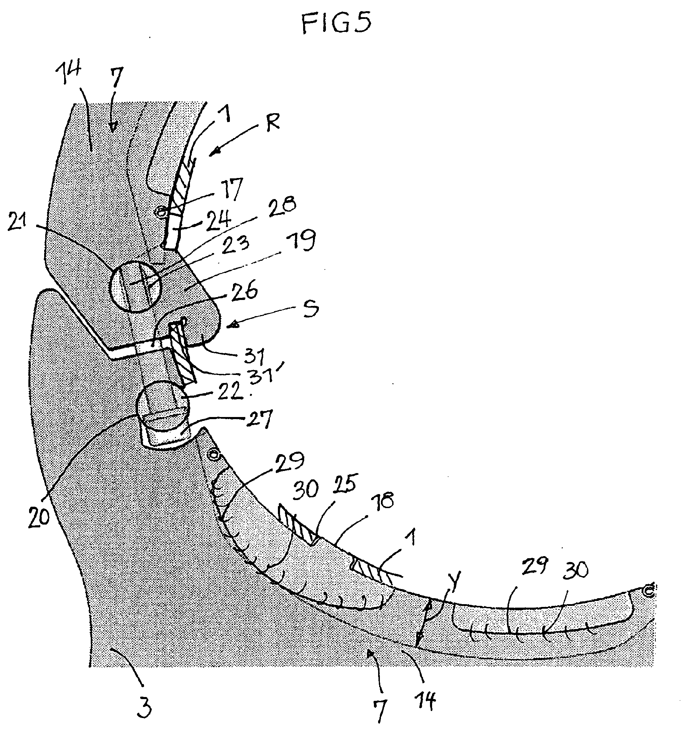

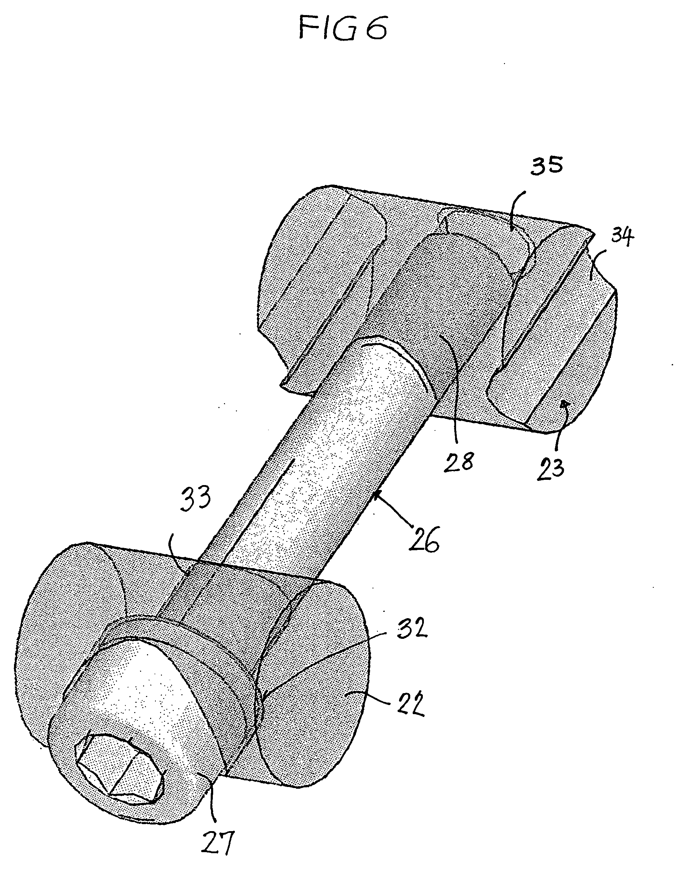

Fig. 4 illustrates in a perspective view a single ring R of the shown embodiment. The three ring segments 7 are identical. The distance x between the tines 3, 4 corresponds at least to the thickness of the knife K and the retainer 13. The inner periphery of each ring segment 7 fits on a round periphery of the rotor 1. In case that the rotor 1 has a hexagonal or octagonal periphery, the inner periphery of each ring segment 7 is adapted to fit on this periphery cross-section. The connections S between the ring segments 7 are threaded connections in the shown embodiment. The threaded connections are shown in more detail in Figs 5 and 6.

Fig. 4 further illustrates that in each ring segment 7 the tines 3, 4 are rigidly connected via their tine root portions 14, 15 to a support plate 16 which is positioned in-between the root portions 14, 15. The support plate 16 has, in the shown embodiment, a sickle-shaped contour (Fig. 5) and does not extend over the full length of the ring segment 7. The root portions 14, 15 could be rigidly connected to the support plate 16 by threaded or bolted connections. However, it is preferred to use welded connections (welds 30) for this purpose. Each root portion 14, 15 has at least one cut-out 29 along the inner periphery. The inner contour of the cut-out 29 is set back behind the inner periphery of the support plate 16. The welds 30 may e.g. be placed in this region.

The mentioned axial and circumferential form-fit connections between each ring R and the rotor 1 are constituted by engagement slots or engagement depressions in the periphery of the rotor 1 (Fig. 5, slots 24, 25) and engagement protrusions 18 and 19 in the periphery of each ring segment 7. In the embodiment shown, a block-shaped engagement protrusion 18 is formed at the inner periphery in the middle of the support plate 16. This engagement protrusion 18 can be inserted into a slot 25 of the rotor 1 (Fig. 5). Additionally, each tine root portion 14, 15 is equipped with another engagement protrusion 19, which in the embodiment shown is hook-shaped (Fig. 5) with the hook 31 protruding in circumferential direction beyond a throat 31'. This engagement protrusion 19 is first radially inserted into a slot 24 of the rotor 1 and is then displaced in circumferential direction until the hook 31 grips behind the slot edge in order to secure the ring segment in radial direction on the rotor 1.

In order to facilitate an easy welding process when welding the root portions 14, 15 to the support plate 16, aligning bolt connections 17 may be provided between both root portions 15, 14 and the support plate 16.

According to Figs 4 and 5 each ring segment 7 is formed with a first tensioning skewback 20 (a jaw which is open to the inner periphery of the root portion 14, 15) and a second tensioning skewback 21 (a through bore). The first and second tensioning skewbacks 20, 21 commonly accommodate first and second tensioning axles 22, 23. The circumferential extension of the support plate 16 is selected such that the support plate 16 is situated within the circumferential distance between the first and second tensioning skewbacks (Fig. 5).

Respective first and second tensioning axles 22, 23 are interconnected by at least one tensioning screw 26 (schematically indicated in Fig. 4.), or another connecting and/or tensioning structure.

Fig. 5 illustrates the welds 30 in the cut-outs 29 of the tine root portion 14 for rigidly connecting the tines 3, 4 and the support plate 16. Furthermore, the form-fit connections are shown between the engagement protrusions 18 and 19 and the slots 25, 24 of the rotor 1. Instead engagement protrusions could be formed on the rotor for engagement into depressions formed in the periphery of each ring segment 7.

As shown in Figs 5 and 6, the first and second tensioning axles 22, 23 are accommodated in the tensioning skewbacks 20, 21 such that they commonly engage at both tine root portions 14, 15, meaning that the tines 3, 4 share a common connection S and a common ring segment 7 as well. The tensioning axle 22, preferably, may be rotatable in the tensioning skewback 20 about an axis parallel to the ring axis and is e.g. of cylindrical form with a diametrically extending through bore 33 and a sunk-in abutment shoulder 32 for a head 27 of the tensioning screw 26. The tensioning axle 23 as well may be rotatable in the tensioning skewback 21 about an axis parallel to the ring axis and has a diametric threaded bore 35 accommodating a threaded shaft 28 of the tensioning screw 26. The tensioning axle 23 e.g. has a cylindrical shape with diametrically extending depressions 34 in both front ends, allowing to properly align the threaded bore 35 to the threaded shaft 28 when inserting the threaded shaft 28. Instead, the tensioning axle 23 could be a threaded nut which, preferably, is rotatably accommodated in the tensioning skewback 21.

The tensioning skewback 20 facilitates an easy separation of two ring segments 7 after loosening the tensioning screw 26 until the tensioning axle 22 can be swung out inwardly of the jaw of the tensioning skewback 20.

Preferably, the tensioning screw 26 is a hexagon socket set screw or hexagon socket screw (as shown in Fig. 6) and is positioned in the ring segment 7 in the middle between the tines 3, 4. A single tensioning screw 26 is sufficient for the embodiment as shown in Fig. 4. However, if the ring segment 7 is equipped with more than two axially spaced apart tines 3, 4, more than one tensioning screw or connecting and/or tensioning structure could be provided per connection S.

In not shown alternatives the threaded connections could be configured differently. As further alternatives other types of connections S which are detachable in a relatively broad sense could be used.

In case of damage of a tine 3, 4 the respective ring R is separated into the respective number of ring segments 7. The ring segment 7 having a damaged tine 3 and 4 is then replaced completely.

Owing to the rigid connection of the several axially spaced apart tines 3, 4 with the support plate 16 (or even more than one support plate 16) in each ring segment 7, and due to the fact that the tines 3, 4 commonly share the ring segment 7 and the connection S, the stability of each tine 3, 4 against forces acting substantially parallel to the axis of the ring R is significantly improved. Furthermore, as the arrangement of at least two axially spaced apart tines 3, 4 on one ring segment 7 saves axial mounting space, the thickness of each tine 3, 4 and/or the tine root portion 14, 15 may be selected specifically with a view to maximum stability against sidewardly acting forces.

## Claims

1. Crop conveyor (F) for an agricultural machine (M) like a baler or a self-loading wagon, comprising
a rotatable rotor (1),
a plurality of coaxial rings (R) mounted on the rotor (1)
each ring (R) assembled from at least two detachably connected ring segments (7)
at least one ring segment (7) being equipped with at least one tine (3, 4) and
stationarily positioned knives (K) and retainers (13) for co-action with the tines (3, 4) of the rotating rotor (1), **characterised in that** the at least one ring segment (7) of the ring (R) is equipped with at least two tines (3, 4) positioned at the ring segment (7) in planes which are spaced apart in the direction of the ring axis.

2. Crop conveyor as in claim 1, **characterised in that** in the ring segment (7) at least one, preferably sickle-shaped, support plate (16) is arranged between respective two root portions (14, 15) of the tines (3, 4), and that the support plate (16) and the root portions (14, 15) are rigidly connected to each other, preferably are welded or screwed to one another.

3. Crop conveyor as in claim 1, **characterised in that** the ring segments (7) are interconnected by threaded connections (S) each including at least one tensioning screw (26).

4. Crop conveyor as in claim 1, **characterised in that** a respective connection (S) commonly engages at all of the root portions (14, 15) of the tines (3, 4) of the ring segment (7).

5. Crop conveyor as in 2, **characterised in that** each root portion (14, 15) has at least one cut-out (29), and that the root portion (14, 15) is welded (30) to the support plate (16) at least in the cut-out (29).

6. Crop conveyor as in claim 1, **characterised in that** an axial and rotary form-fit connection is provided between each ring segment (7) and the rotor (1), preferably constituted by mutually co-acting depressions or slots (25, 24) and engagement protrusions (18, 19) at the rotor (1), and/or at the inner periphery of the ring segment (7).

7. Crop conveyor as in claim 6, **characterised in that** at the inner periphery of the support plate (16) at least one engagement protrusion (18) is provided for radial insertion into a slot (25) of the rotor (1), and that at least one hook-shaped engagement protrusion (19) for both radial and circumferential insertion into another slot (24) of the rotor (1) is provided at the inner periphery of each root portion (14, 15).

8. Crop conveyor as in at least one of claims 1 to 7, **characterised in that** an axial distance (x), preferably corresponding to the axial thickness of the support plate (16), is provided between the root portions (14, 15) and/or between the tines (3, 4)of the ring segment (7), the axial distance (x), preferably, at least corresponding to the axial thickness of a knife (K) and/or a retainer (13) respectively co-acting with the tines (3, 4) of the ring segment (7) by an engagement into the interspace between the tines (3, 4) as defined by the axial distance (x).

9. Crop conveyor as in claim 3, **characterised in that** a first tensioning skewback (20) and a second tensioning skewback (21) are provided in each root portion (14, 15) of the tines (3, 4) of the ring segment (7), that the respective first tensioning skewbacks (20) and the respective second tensioning skewbacks (21) of the root portions (14, 15) of the tines (3, 4) of the ring segment (7) are axially aligned with each other and accommodate first and second axial tensioning axles (22, 23), preferably rotatable tensioning axles, and that the tensioning screw (26) engages at the first and second tensioning axles (22, 23) of two connected ring segments (7).

10. Crop conveyor as in claim 9, **characterised in that** the second tensioning skewback (21) is an axial through bore, and that the first tensioning skewback (20) is a jaw being open to the inner periphery of the root portion (14, 15).

11. Crop conveyor as in claim 7 and 10, **characterised in that** the hook-shaped engagement (19) protrusion is positioned underneath of one of the tensioning skewbacks (20, 21), preferably beneath the second tensioning skewback (21), and is formed with a hook (31) protruding beyond a throat (31') in tensioning direction of the tensioning screw (26).

12. Crop conveyor as in claim 9, **characterised in that** the first tensioning axle (22) has a through bore (93) and a sunk-in abutment should (32) for the head (27) of the tensioning screw (26), preferably, of a hexagon socket set screw or hexagon socket screw, and that the second tensioning axle (23) has a threaded bore (35) for a threaded shaft (28) of the tensioning screw (26), preferably, is a threaded nut which, preferably, is supported for rotation in the second tensioning skewback (21) about an axis parallel to the axis of the rotor (1).

13. Crop conveyor as in claims 7 and 12, **characterised in that** the tensioning screw (26) is positioned in the interspace defined by the axial distance (x) between the respective root portions (14, 15) of the ring segment (7).

14. Crop conveyor as in claims 2 and 9, **characterised in that** the support plate (16) extends in circumferential direction between the first and second tensioning skewbacks (20, 21).

15. Crop conveyor as in at least one of claims 1 to 14, **characterised in that** each ring (R) consists of three identical ring segments (7) each having at least two axially juxtaposed root portions (14, 15) of two adjacent substantially triangular tines (3, 4), and that, preferably, axially adjacent rings (R) are placed on the rotor (1) with a phase difference in rotary direction.

16. Crop conveyor as in claim 1, **characterised in that** the inner periphery of each ring segment (7) is designed to fit on a round or hexagonal or octagonal rotor body (1).

17. Crop conveyor as in claim 1, **characterised in that** the tines (3, 4) and the root portions (14, 15) on of each ring segment (7) are of equal shape and are positioned such that they congruent with each other in the direction of the axis of the ring (R).

## Patentansprüche

1. Fördereinrichtung (F) für eine Landwirtschaftsmaschine (M), wie beispielsweise eine Ballenpresse oder einen Selbstladewagen, die umfasst:
einen drehbaren Rotor (1),
eine Vielzahl koaxialer Ringe (R), die an dem Rotor (1) angebracht sind,
wobei jeder Ring (R) aus wenigstens zwei lösbar verbundenen Ringsegmenten (7) zusammengesetzt ist,
wenigstens ein Ringsegment (7) mit wenigstens einer Zinke (3, 4) versehen ist, und
stationär positionierte Messer (K) und Halteelemente (3) zum Zusammenwirken mit den Zinken (3, 4) des sich drehenden Rotors (1), **dadurch gekennzeichnet, dass** wenigstens ein Ringsegment (7) des Rings (R) mit wenigstens zwei Zinken (3, 4) versehen ist, die an dem Ringsegment (7) in Ebenen angeordnet sind, die in der Richtung der Ringachse voneinander beabstandet sind.

2. Fördereinrichtung nach Anspruch 1, **dadurch gekennzeichnet, dass** in dem Ringsegment (7) wenigstens eine vorzugsweise sichelförmige Halteplatte (16) zwischen jeweils zwei Fußabschnitten (14, 15) der Zinken (3, 4) angeordnet ist, und dass die Halteplatte (16) und die Fußabschnitte (14, 15) starr miteinander verbunden sind, vorzugsweise miteinander verschweißt oder verschraubt sind.

3. Fördereinrichtung nach Anspruch 1, **dadurch gekennzeichnet, dass** die Ringsegmente (7) über Gewindeverbindungen (S) miteinander verbunden sind, die jeweils wenigstens eine Spannschraube (26) enthalten.

4. Fördereinrichtung nach Anspruch 1, **dadurch gekennzeichnet, dass** eine jeweilige Verbindung (S) gemeinsam mit allen Fußabschnitten (24, 15) der Zinken (3, 4) des Ringsegmentes (7) in Eingriff ist.

5. Fördereinrichtung nach Anspruch 2, **dadurch gekennzeichnet, dass** jeder Fußabschnitt (14, 15) wenigstens einen Ausschnitt (29) hat, und dass der Fußabschnitt (14, 15) an der Trageplatte (16) wenigstens in dem Ausschnitt (29) angeschweißt ist.

6. Fördereinrichtung nach Anspruch 1, **dadurch gekennzeichnet, dass** eine formschlüssige Axial- und Drehverbindung zwischen jedem Ringsegment (7) und dem Rotor (1) vorhanden ist, die vorzugsweise durch miteinander zusammenwirkende Vertiefungen oder Schlitze (25, 24) und Eingriffsvorsprünge (18, 19) an dem Rotor (1) und/oder an dem Innenumfang des Ringsegmentes (7) gebildet wird.

7. Fördereinrichtung nach Anspruch 6, **dadurch gekennzeichnet, dass** am Innenumfang der Trageplatte (16) wenigstens ein Eingriffsvorsprung (18) zum radialen Einführen in einen Schlitz (25) des Rotors (1) vorhanden ist, und dass wenigstens ein hakenförmiger Eingriffsvorsprung (19) zum Einführen in einen anderen Schlitz (24) des Rotors (1) sowohl in Radial- als auch in Umfangsrichtung am Innenumfang jedes Fußabschnitts (14, 15) vorhanden ist.

8. Fördereinrichtung nach wenigstens einem der Ansprüche 1 bis 7, **dadurch gekennzeichnet, dass** ein axialer Abstand (X), der vorzugsweise der axialen Dicke der Trageplatte (16) entspricht, zwischen den Fußabschnitten (14, 15) und/oder zwischen den Zinken (3, 4) des Ringsegmentes (7) vorhanden ist, wobei der axiale Abstand (X) vorzugsweise wenigstens der axialen Dicke eines Messers (K) und/oder eines Halteelementes (13) entspricht, die jeweils durch einen Eingriff in den Zwischenraum zwischen den Zinken (3, 4), der durch den axialen Abstand (X) bestimmt wird, mit den Zinken (3, 4) des Ringsegmentes (7) zusammenwirken.

9. Fördereinrichtung nach Anspruch 3, **dadurch gekennzeichnet, dass** ein erstes Spann-Widerlager (20) und ein zweites Spann-Widerlager (21) in jedem Fußabschnitt (14, 15) der Zinken (3, 4) des Ringsegmentes (7) vorhanden sind, dass die jeweiligen ersten Spann-Widerlager (20) und die jeweiligen zweiten Spann-Widerlager (21) der Fußabschnitte (14, 15) der Zinken (3, 4) des Ringsegmentes (7) axial aufeinander ausgerichtet sind und erste sowie zweite axiale Spannachsen (22, 23), vorzugsweise drehbare Spannachsen, aufnehmen, und dass die Spannschraube (26) mit der ersten und der zweiten Spannachse (22, 23) zweier verbundener Ringsegmente (7) in Eingriff ist.

10. Fördereinrichtung nach Anspruch 9, **dadurch gekennzeichnet, dass** das zweite Spann-Widerlager (21) eine axiale Durchgangsbohrung ist, und dass das erste Spann-Widerlager (20) eine Spannbacke ist, die zu dem Innenumfang des Fußabschnitts (14, 15) offen ist.

11. Fördereinrichtung nach Anspruch 7 und 10, **dadurch gekennzeichnet, dass** der hakenförmige Eingriffsvorsprung (19) unterhalb eines der Spann-Widerlager (20, 21), vorzugsweise unterhalb des zweiten Spann-Widerlagers (21), angeordnet ist und mit einem Haken (31) versehen ist, der über einen Einschnitt (31") in Spannrichtung der Spannschraube (26) hinaus vorsteht.

12. Fördereinrichtung nach Anspruch 9, **dadurch gekennzeichnet, dass** die erste Spannachse (22) eine Durchgangsbohrung (93) und eine vertiefte Anschlagschulter (32) für den Kopf (27) der Spannschraube (26), vorzugsweise eines Gewindestiftes mit Innensechskant oder einer Schraube mit Innensechskant, aufweist, und dass die zweite Spannachse (23) eine Gewindebohrung (35) für einen Gewindeschaft (28) der Spannschraube (26) hat, vorzugsweise eine Gewindemutter ist, die vorzugsweise zur Drehung in dem zweiten Spann-Widerlager (21) um eine Achse parallel zur Achse des Rotors (1) gelagert ist.

13. Fördereinrichtung nach den Ansprüchen 7 und 12, **dadurch gekennzeichnet, dass** die Spannschraube (26) in dem Zwischenraum angeordnet ist, der durch den axialen Abstand (X) zwischen den jeweiligen Fußabschnitten (14, 15) des Ringsegmentes (7) bestimmt wird.

14. Fördereinrichtung nach den Ansprüchen 2 und 9, **dadurch gekennzeichnet, dass** sich die Trageplatte (16) in Umfangsrichtung zwischen dem ersten und dem zweiten Spann-Widerlager (20, 21) erstreckt.

15. Fördereinrichtung nach wenigstens einem der Ansprüche 1 bis 14, **dadurch gekennzeichnet, dass** jeder Ring (R) aus drei identischen Ringsegmenten (7) besteht, die jeweils wenigstens zwei axial benachbarte Fußabschnitte (14, 15) zweier aneinandergrenzender, im Wesentlichen dreieckiger Zinken (3, 4) haben, und dass vorzugsweise axial aneinandergrenzende Ringe (R) an dem Rotor (1) mit einem Phasenunterschied in Drehrichtung angeordnet sind.

16. Fördereinrichtung nach Anspruch 1, **dadurch gekennzeichnet, dass** der Innenumfang jedes Ringsegmentes (7) so eingerichtet ist, dass er auf einen runden oder sechseckigen oder achteckigen Rotorkörper (1) passt.

17. Fördereinrichtung nach Anspruch 1, **dadurch gekennzeichnet, dass** die Zinken (3, 4) und die Fußabschnitte (14, 15) an jedem Ringsegment (7) gleiche Formen haben und so angeordnet sind, dass sie in der Richtung der Achse des Rings (R) kongruent zueinander sind.

## Revendications

1. Convoyeur de récolte (F) pour une machine agricole (M) comme une ramasseuse-presse ou un chariot autochargeur, comprenant
un rotor rotatif (1),
plusieurs couronnes coaxiales (R) montées sur le rotor (1)
chaque couronne (R) étant assemblée à partir d'au moins deux segments de couronne reliés de façon amovible (7)
au moins un segment de couronne (7) étant équipé d'au moins une dent (3, 4) et
des couteaux (K) positionnés de manière immobile et des dispositifs de retenue (13) pour agir de concert avec les dents (3, 4) du rotor rotatif (1), **caractérisé en ce que** le segment de couronne (7) de la couronne (R) est équipé d'au moins deux dents (3, 4) positionnées au niveau du segment de couronne (7) dans des plans qui sont espacés dans la direction de l'axe de couronne.

2. Convoyeur de récolte selon la revendication 1, **caractérisé en ce que**, dans le segment de couronne (7), au moins une plaque de support (16), de préférence falciforme, est agencée entre deux parties d'emplanture respectives (14, 15) des dents (3, 4), et **en ce que** la plaque de support (16) et les parties d'emplanture (14, 15) sont reliées de façon rigide les unes aux autres, de préférence soudées ou vissées les unes aux autres.

3. Convoyeur de récolte selon la revendication 1, **caractérisé en ce que** les segments de couronne (7) sont interconnectés par des connexions filetées (S) incluant chacune au moins une vis de mise en tension (26).

4. Convoyeur de récolte selon la revendication 1, **caractérisé en ce qu'**une connexion respective (S) s'engage de manière commune au niveau de toutes les parties d'emplanture (14, 15) des dents (3, 4) du segment de couronne (7).

5. Convoyeur de récolte selon la revendication 2, **caractérisé en ce que** chaque partie d'emplanture (14, 15) possède au moins un évidement (29) et **en ce que** la partie d'emplanture (14, 15) est soudée (30) à la plaque de support (16) au moins dans l'évidement (29).

6. Convoyeur de récolte selon la revendication 1, **caractérisé en ce qu'**une connexion axiale et rotative de forme adéquate est disposée entre chaque segment de couronne (7) et le rotor (1), de préférence constituée par des creux ou des fentes agissant mutuellement de concert (25, 24) et des protubérances de mise en prise (18, 19) au niveau du rotor (1), et/ou au niveau de la périphérie intérieure du segment de couronne (7).

7. Convoyeur de récolte selon la revendication 6, **caractérisé en ce que**, au niveau de la périphérie intérieure de la plaque de support (16), au moins une protubérance de mise en prise (18) est prévue pour insertion radiale dans une fente (25) du rotor (1), et **en ce qu'**au moins une protubérance de mise en prise en forme de crochet (19) pour insertion tant radiale que circonférentielle dans une autre fente (24) du rotor (1) est prévue au niveau de la périphérie intérieure de chaque partie d'emplanture (14, 15).

8. Convoyeur de récolte selon au moins une des revendications 1 à 7, **caractérisé en ce qu'**une distance axiale (x), correspondant de préférence à l'épaisseur axiale de la plaque de support (16), est prévue entre les parties d'emplanture (14, 15) et/ou entre les dents (3, 4) du segment de couronne (7), la distance axiale (x), de préférence, correspondant au moins à l'épaisseur axiale d'un couteau (K) et/ou d'un dispositif de retenue (13) agissant respectivement de concert avec les dents (3, 4) du segment de couronne (7) par une mise en prise dans l'intervalle entre les dents (3, 4) tel que défini par la distance axiale (x).

9. Convoyeur de récolte selon la revendication 3, **caractérisé en ce qu'**une première assise de mise en tension (20) et une seconde assise de mise en tension (21) sont prévues dans chaque partie d'emplanture (14, 15) des dents (3, 4) du segment de couronne (7), **en ce que** les premières assises de mise en tension respectives (20) et les secondes assises de mise en tension respectives (21) des parties d'emplanture (14, 15) des dents (3, 4) du segment de couronne (7) sont alignées de façon axiale les unes avec les autres et logent des premier et second axes de mise en tension axiale (22, 23), de préférence des axes de mise en tension rotatifs, et **en ce que** la vis de mise en tension (26) s'engage au niveau des premier et second axes de mise en tension (22, 23) de deux segments de couronne reliés (7).

10. Convoyeur de récolte selon la revendication 9, **caractérisé en ce que** la seconde assise de mise en tension (21) est un alésage axial traversant, et **en ce que** la première assise de mise en tension (20) est une mâchoire ouverte sur la périphérie intérieure de la partie d'emplanture (14, 15).

11. Convoyeur de récolte selon les revendications 7 et 10, **caractérisé en ce que** la protubérance de mise en prise en forme de crochet (19) est positionnée au-dessous d'une des assises de mise en tension (20, 21), de préférence au-dessous de la seconde assise de mise en tension (21), et est formée avec un crochet (31) avançant au-delà d'une gorge (31') dans un sens de mise en tension de la vis de mise en tension (26).

12. Convoyeur de récolte selon la revendication 9, **caractérisé en ce que** le premier axe de mise en tension (22) possède un alésage traversant (93) et un épaulement formant butée encastrée (32) pour la tête (27) de la vis de mise en tension (26), de préférence, d'une vis de pression à tête creuse hexagonale ou d'une vis à six pans creux, et **en ce que** le second axe de mise en tension (23) possède un alésage fileté (35) pour un arbre fileté (28) de la vis de mise en tension (26), de préférence, est un écrou fileté qui, de préférence, est supporté pour rotation dans la seconde assise de mise en tension (21) autour d'un axe parallèle à l'axe du rotor (1).

13. Convoyeur de récolte selon les revendications 7 et 12, **caractérisé en ce que** la vis de mise en tension (26) est positionnée dans l'intervalle défini par la distance axiale (x) entre les parties d'emplanture respectives (14, 15) du segment de couronne (7).

14. Convoyeur de récolte selon les revendications 2 et 9, **caractérisé en ce que** la plaque de support (16) s'étend dans une direction circonférentielle entre les première et seconde assises de mise en tension (20, 21).

15. Convoyeur de récolte selon au moins une des revendications 1 à 14, **caractérisé en ce que** chaque couronne (R) consiste en trois segments de couronne identiques (7) ayant chacun au moins deux parties d'emplanture juxtaposées de façon axiale (14, 15) de deux dents triangulaires sensiblement adjacentes (3, 4), et **en ce que**, de préférence, des couronnes adjacentes de façon axiale (R) sont placées sur le rotor (1) avec une différence de phase dans la direction en rotation.

16. Convoyeur de récolte selon la revendication 1, **caractérisé en ce que** la périphérie intérieure de chaque segment de couronne (7) est conçu pour s'ajuster sur un corps de rotor rond ou hexagonal ou octogonal (1).

17. Convoyeur de récolte selon la revendication 1, **caractérisé en ce que** les dents (3, 4) et les parties d'emplanture (14, 15) de chaque segment de couronne (7) sont de forme égale et sont positionnées de sorte qu'elles sont congruentes les unes avec les autres dans la direction de l'axe de la couronne (R).
